# EUROPEAN PATENT SPECIFICATION

(11) **EP 4 087 759 B1**
(45) Date of publication and mention of the grant of the patent: **04.09.2024**
(21) Application number: 20824183.6
(22) Date of filing: 09.12.2020
(51) Int. Cl.: B60T 13/74, B60T 17/22, B60T 7/04, B60T 7/08

(54) **A BRAKE SYSTEM FOR A VEHICLE**
BREMSANLAGE FÜR EIN FAHRZEUG
UN SYSTÈME DE FREINAGE POUR UN VÉHICULE

(30) Priority: 09.01.2020 CN 202010022365
(43) Date of publication of application: 16.11.2022
(73) Proprietor: Haldex Aktiebolag, 261 24 Landskrona (SE)
(72) Inventor: NILLSON, Anders, Shanghai, 26124 (CN); LINDQVIST, Anders, Shanghai, 201804 (CN); DONG, Xianbin, Shanghai, 201804 (CN)
(74) Representative: Müller Schupfner & Partner Patent- und Rechtsanwaltspartnerschaft mbB (Muc)
(86) International application number: PCT/EP2020/085261
(87) International publication number: WO 2021/139954

(56) References cited:
- EP-A1- 3 293 063
- EP-A1- 3 339 119
- EP-A2- 1 741 607
- EP-B1- 1 741 607
- DE-A1- 102009 046 231
- US-A1- 2006 108 867

## Description

### TECHNICAL FIELD OF THE INVENTION

The present invention relates to a braking technology of a vehicle, and in particular to an electromechanical brake (EMB) system with a redundant architecture.

### PRIOR ART

Compared with traditional pneumatic and hydraulic brake systems, the electromechanical brake system totally by wire has advantages of quick response, environmental friendliness, and simplified chassis architecture. Therefore, the electromechanical brake system is a development direction of the next generation of brake systems. In the electromechanical brake system, since no medium such as brake fluid and compressed air is applied, the brake demand input by a driver through a brake pedal or a parking switch needs to be converted into an electrical signal by a sensor to be transmitted to the brake system. Therefore, reliability and fault tolerance have become the keys to the electromechanical brake system.

Generally, in order to ensure the reliability and accuracy of sensors of the brake pedal and the parking switch, redundant sensors may be provided for mutual verification of signals. However, when the power supply of the sensors fails, the verification may not be performed or the sensors may not work. Additionally, when the power supply to the controller of the brake system fails, the controller may not handle the brake demand even if the sensors work normally.

Therefore, in order to overcome the shortcomings in the prior art, there is an urgent need in the art for a highly redundant electromechanical brake system, which may ensure the waking up and operability of the brake system when a portion of the power supply network fails.

Relevant prior art can be found in DE 10 2009 046 231 A1, EP 3 339 119 A1, EP 1 741 607 A2, EP 3 293 063 A1 and US 2006/108867 A1.

### OBJECT OF THE INVENTION

It is the object of the present invention to provide a brake system with an increased reliability and/or to provide a brake system which may ensure the waking up and operability of the brake system even when a portion of the power supply network fails.

### SOLUTION

According to the present invention, the object of the invention is solved by the features of the independent claim. Additional preferred embodiments according to the invention are to be seen in the dependent claims.

### DESCRIPTION OF THE INVENTION

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

The brake system of the vehicle according to the present invention comprises at least two control modules and an electronic brake device disposed on each wheel of the vehicle. Each of the control modules comprises a capacitive power source and a controller, and connects to a sensor group. The capacitive power source is powered from a recharging power source for powering the electric brake devices to generate a braking force. The controller and/or at least a portion of sensors of the sensor group are redundantly powered by a corresponding capacitive power source and the recharging power source. By using the architecture of the highly redundant electromechanical brake system with a redundant power supply function, the brake system of the vehicle may ensure the waking up and operability of the brake system even when a portion of the power supply network fails.

According to the electromechanical brake system provided in the present invention, the sensor group comprises a switch or a sensor for indicating whether a brake demand input device of the vehicle is operated. A signal of the switch or the sensor is configured to wake up the brake system. By using the signal of the switch or sensor indicating whether the brake demand input device of the vehicle is operated as one of the wake-up signals of the brake system, the brake system of the vehicle according to the present invention may be independent of the vehicle system and may be awakened and operated only by operating the brake demand input device, thereby improving the safety of the vehicle.

According to the electromechanical brake system provided in the present invention, preferably, the controller and/or at least the portion of sensors of the sensor group may be configured to be powered by one of the corresponding capacitive power source and the recharging power source with higher voltage. Therefore, under common circumstances of normal operation, one power source with a higher design voltage may be used to power the controller and/or at least the portion of sensors of the sensor group, and the other power source may be automatically switched to power the controller and/or at least the portion of sensors of the sensor group, when a voltage drop caused by an emergency such as a failure of the power supply with the higher design voltage occurs, thereby achieving the redundant power supply.

According to the electromechanical brake system provided in the present invention, optionally, the sensor group may further comprise one or more sensors for indicating angle, stroke or force of operation of the brake demand input device of the vehicle, so as to convert the brake demand, input by a driver through the brake pedal and the parking switch, into an electrical signal to transmit to the brake system. When multiple sensors measuring different physical quantities are used, the sensor signals may be further verified with each other to reduce the possibility of consistent errors of similar sensors, thereby further improving the reliability of the brake system.

According to the electromechanical brake system provided in the present invention, optionally, the sensor group may comprise at least two sensors for generating signals of different types and/or different ranges. The controller may verify whether the signals are matched according to a pre-stored signal relationship data. By using the sensor group comprising at least two sensors for generating signals of different types and/or different ranges, same interference factors may be prevented from having consistent influences on multiple sensors in the sensor group, thereby further improving the reliability of the brake system of the vehicle.

According to the electromechanical brake system provided in the present invention, optionally, each of the sensor groups respectively detects the operation of the same brake demand input device thereby generating redundant signals. Typically, the two sensor groups are provided in the same brake input device, either the brake pedal or the parking switch, for providing redundant signals in the event of a fault in one of the sensor groups or for cross verification of the operation to prevent sensor error. However, depending on the configuration of the sensors in the sensor group, it is also feasible that the two sensor groups are provided in different brake demand input devices, e.g. one sensor group for the brake pedal and the other for the parking switch.

According to the electromechanical brake system provided in the present invention, preferably, the control modules may be communicatively connected. In response to a verification failure of a signal, acquired by any one of the control modules from a corresponding sensor group, the control module may employ a signal with successful verification from another control module. By using the communicatively connected control modules, when the verification of the signal acquired by any one of the control modules from a corresponding sensor group fails, the vehicle may be braked by the signal with successful verification obtained from another control module, thereby improving the fault tolerance of the brake system of the vehicle.

According to the electromechanical brake system provided in the present invention, optionally, the recharging power source and the capacitive power source are electrically connected to a voltage converter, wherein the power supply voltage of the controller and/or at least a portion of sensors of the sensor group is converted by the voltage converter.

According to the electromechanical brake system provided in the present invention, optionally, the recharging power source and the capacitive power source may be electrically connected to a voltage control module, and redundantly supply power to at least the portion of sensors of the sensor group via the voltage control module. By using the voltage control module, the voltage provided by the capacitive power source or the recharging power source may be converted into a voltage suitable for at least the portion of sensors of the sensor group to operate. Therefore, the voltage control module may ensure that at least the portion of sensors of the sensor group may work normally, when powered by the capacitive power source, or powered by the recharging power source, thereby improving the fault tolerance of the brake system of the vehicle.

According to the electromechanical brake system provided in the present invention, preferably, the voltage control module may comprise a DC/DC module and/or a low dropout regulator.

According to the electromechanical brake system provided in the present invention, optionally, the recharging power source may comprise a main switch. The capacitive power source may supply power to the controller and/or at least the portion of sensors of the sensor group to maintain a standby state or operability of the brake system when the main switch is off.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

The above features and advantages of the present invention will be better understood after reading the detailed description of the embodiments of the present invention in conjunction with the following figures. In the figures, components are not necessarily drawn to scale, and components having similar related features may have the same or similar reference numerals.
- **Fig. 1**: shows a schematic structural diagram of a brake system of a vehicle according to an aspect of the present invention.
- **Fig. 2**: shows a schematic structural diagram of a brake system of a vehicle according to an embodiment of the present invention.
- **Fig. 3**: shows a schematic diagram of interfaces of a sensor group according to an embodiment of the present invention.
- **Fig. 4**: shows a schematic diagram of generating a brake request according to a sensor signal according to an embodiment of the present invention.
- **Fig. 5**: shows a schematic structural diagram of a brake system of a vehicle according to an embodiment of the present invention.

### DESCRIPTION OF THE DRAWINGS

The embodiments of the present invention are described in the following detailed description. Other advantages and effects of the present invention will be readily apparent to those skilled in the art from this disclosure. Although the description of the present invention will be described in conjunction with the preferred embodiments, this is not a limitation of the present invention. On the contrary, the invention is described in connection with the embodiments so as to cover other alternatives or modifications that are possible in the embodiments of the present invention. In order to provide a thorough understanding of the present invention, many specific details are included in the following description. The present invention may also be practiced without these details. In addition, some specific details are omitted in the description in order to avoid confusing or obscuring the present invention.

In the description of the present invention, it should be noted that the terms "installation", "connecting", and "connected" should be understood broadly unless explicitly stated and defined otherwise. For example, the terms "installation", "connecting", and "connected" may be either a fixed connection, a detachable connection, or an integral connection; the terms may be either a mechanical connection or an electrical connection; the terms also may be either a direct connection, an indirect connection through an intermediate medium, or an internal connection between two components. The specific meaning of the above terms in the present invention can be understood in a specific case by those skilled in the art.

In order to overcome the shortcomings in the prior art, the present invention provides a highly redundant electromechanical brake (EMB) system for improving reliability and fault tolerance of the brake system of the vehicle. Even when a portion of supply network fails, the electromechanical brake system according to the embodiment may still accurately identify the brake demand of a driver, and ensure the operability of the brake system.

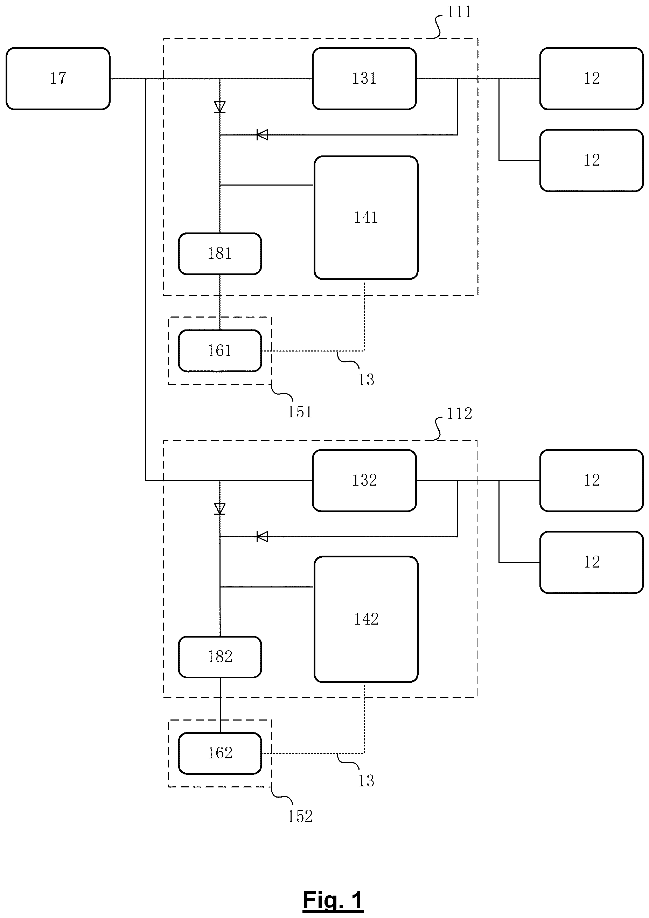

Referring to **Fig. 1,** Fig. 1 shows a schematic structural diagram of a brake system of a vehicle according to an aspect of the present invention.

As shown in Fig. 1, the brake system of the vehicle according to the embodiment may comprise two redundant control modules 111-112 and an electric brake device 12 provided on each wheel of the vehicle. The control module 111 may comprise a capacitive power source 131 and a controller 141, and is connected to a sensor group 151. The control module 112 may comprise a capacitive power source 132 and a controller 142, and is connected to a sensor group 152.

Taking the control module 111 as an example, according to an exemplary implementation, the control module 111 comprising the capacitive power source 131 and the controller 141 may be installed on the vehicle as an independently packaged device. However, those skilled in the art may realize that the electrically connected capacitive power source 131 and controller 141 may also be installed in different positions of the vehicle in a non-independent package manner, and the packaging method and the installation position thereof may be adjusted according to the actual layout of the vehicle.

The electric brake device 12 provided on each wheel of the vehicle may comprise a brake motor for generating a braking force, and a mechanical transmission mechanism driven by the brake motor. In an embodiment of a disc brake, the mechanical transmission mechanism may finally generate a braking force by driving a caliper to clamp the brake disc.

When a driver inputs a brake demand by operating a brake demand input device (not shown) such as a brake pedal, a parking switch or the like, at least a portion of the sensors in the sensor groups 151-152 may measure the operation amount of the brake demand input device, such as measuring the stroke of the brake pedal or obtaining the on-off state of the parking switch, etc., and convert it into an electrical signal for the control module 111-112 to perform arithmetic processing to generate a brake request. The generated brake request may be sent to each of the electric brake devices 12. Each of the electric brake devices 12 may control the brake motor to rotate, according to the received brake request, to drive the mechanical transmission mechanism, thereby pushing the brake pads to press or away from the brake disc to respond the brake demand.

It should be noted that the electric brake device 12 provided on each wheel of the vehicle may be powered by the capacitive power sources 131-132 of the brake system of the vehicle. The capacitive power sources 131-132 comprise, but are not limited to, ultra-capacitors, especially graphene-based ultra-capacitor modules. The capacitive power sources 131-132 may be powered from the recharging power source 17 of the vehicle, thereby supplying power to the electric brake device 12 provided on each wheel of the vehicle to generate a braking force. The recharging power source 17 of the vehicle comprises, but is not limited to, a vehicle battery, a power battery, a vehicle generator, and a hub generator.

It can be understood that the brake system may provide redundancy for arithmetic control by utilizing the controllers 141-142 of the control modules 111-112. The independent capacitive power sources 131-132 powered by the recharging power source 17 may provide power redundancy. Using multiple sensors in the sensor group 151-152 to acquire a same input operation may provide redundancy in signal acquisition. In the electromechanical brake system shown in Fig. 1, in addition to a sensor measuring the operation amount of the brake demand input device, the sensor group 151 may further comprise a switch or a sensor 161 for indicating whether the brake demand input device of the vehicle, such as a brake pedal, a parking switch or the like, is operated. Accordingly, the sensor group 152 may further comprise a switch or a sensor 162 for indicating whether the brake demand input device is operated. Signals from switches or sensors 161-162 may be used to wake up the brake system of the vehicle.

As shown in Fig. 1, in some embodiments, the recharging power source 17 and the capacitive power source 131 may be electrically connected to the controller 141 and the sensor 161 in the sensor group 151 for redundantly supplying power to the controller 141 and the sensor 161. The recharging power source 17 and the capacitive power source 132 may be electrically connected to the controller 142 and the sensor 162 in the sensor group 152 for redundantly supplying power to the controller 142 and the sensor 162. Optionally, all the sensors in the sensor groups 151-152 may be redundantly powered in the manner described above.

Specifically, the recharging power source 17 and the capacitive power source 131 may be electrically connected to the controller 141 via a diode respectively, so that the controller 141 and the sensor 161 may be powered by one of the recharging power source 17 and the capacitive power source 131 with higher voltage. The recharging power source 17 and the capacitive power source 132 may be electrically connected to the controller 142 via a diode respectively, so that the controller 142 and the sensor 162 may be powered by one of the recharging power source 17 and the capacitive power source 132 with higher voltage.

In one embodiment, the recharging power source 17 may be a vehicle battery, whose output voltage may be 24 V. The capacitive power sources 131-132 may be modules composed of ultra-capacitor cells, whose output voltage may be 48 V, which is higher than the output voltage of the recharging power source 17. In the case of normal vehicle operation, the ultra-capacitor modules 131-132 may supply power to the controllers 141-142 and the sensors 161-162 via corresponding diodes. At this time, the diode corresponding to the vehicle recharging power source 17 is reversely biased, and the vehicle recharging power source 17 does not supply power to the controllers 141-142 and the sensors 161-162. When the ultra-capacitor modules 131-132 fail wherein the output voltage is lower than 24 V or the output voltage cannot be output, the vehicle recharging power source 17 may supply power to the controllers 141-142 and sensors 161-162 via corresponding diodes. At this time, the diodes corresponding to the ultra-capacitor modules 131-132 are reversely biased, and the ultra-capacitor modules 131-132 do not supply power to the controllers 141-142 and sensors 161-162. When the recharging power source 17 fails or is not turned on, so that the ultra-capacitor modules 131-132 cannot be powered normally, the ultra-capacitor modules 131-132 may still use their remaining energy to supply power to the controllers 141-142 and sensors 161-162.

The sensors 161-162 are used to indicate whether a brake demand input device of the vehicle such as a brake pedal, a parking switch or the like is operated, and their signals are transmitted to controllers 141-142 via communication lines 13, used to wake up the brake system. That is, even when the recharging power source 17 is not turned on, for example, when the vehicle is turned off, the brake system may still be woken up, by the power supply of the ultra-capacitor modules 131-132 to the sensors 161-162, in response to the operation of the brake pedal and the parking switch, and the controllers 141-142 may also handle the brake demand by the power supply of the ultra-capacitor modules 131-132, so that the electric brake devices 12 may use the remaining power stored in the ultra-capacitor modules 131-132 to perform the brake.

Therefore, by using the architecture of highly redundant electromechanical brake system with a redundant power supply function described above, regardless of whether the recharging power source 17 or the ultra-capacitor modules 131-132 can normally supply power or not, the brake system of the vehicle may still maintain the power supply to the controllers 141-142 and the sensors 161-162, thereby ensuring the operability of the brake system, and being able to be woken up in a sleep state to provide a braking function.

Those skilled in the art may understand that the proposal that redundant power supply to the controllers 141-142 and sensors 161-162 by the recharging power source 17 and the capacitive power sources 131-132 is only an embodiment according to the present invention, mainly used to clearly show the concept of the present invention and provide a specific proposal that is convenient for the public to implement, rather than to limit the protection scope of the present invention.

Optionally, in one embodiment, the recharging power source 17 and the capacitive power source 131 may only be electrically connected to the controller 141 for redundantly supplying power to the controller 141. Meanwhile, the recharging power source 17 and the capacitive power source 132 may only be electrically connected to the controller 142 for redundantly supplying power to the controller 142.

Optionally, in one embodiment, the recharging power source 17 and the capacitive power source 131 may be electrically connected to all sensors in the sensor group 151 or only to the sensor 161 for redundantly supplying power to the sensor group 151 or the sensor 161. Meanwhile, the recharging power source 17 and the capacitive power source 132 may be electrically connected to all sensors in the sensor group 152 or only to the sensor 162 for redundantly supplying power to the sensor group 152 or the sensor 162.

In one embodiment, the front end of the sensor group 151-152 may further be provided with a voltage control module 181-182. The voltage control module 181-182 may comprise a DC/DC module and/or a low dropout regulator (LDO). The recharging power source 17 and the capacitive power sources 131-132 may be electrically connected to the voltage control modules 181-182 via a diode respectively. The voltage control module 181-182 is configured to stably reduce the high voltage (48 V or 24 V) of the redundant output of the recharging power source 17 and the ultra-capacitor modules 131-132 to a low voltage (12 V) that is suitable for the sensors in the sensor groups 151-152 to operate. Therefore, the voltage control modules 181-182 may ensure the normal operation of the sensors in the sensor groups 151-152, whether they are powered by the ultra-capacitor modules 131-132 or powered by the recharging power source 17 of the vehicle, so that conventional sensors that work at a constant voltage can be used.

Those skilled in the art may understand that the recharging power source 17, using vehicle battery, power battery, vehicle generator and hub generator as examples, is a common power supply on a vehicle. The capacitive power sources 131-132 are dedicated power supply for supplying electric power to the brake motors of the electric brake device 12 provided on each wheel end of the vehicle. Therefore, by using the existing recharging power source 17 of the vehicle and the existing capacitive power sources 131-132 of the electromechanical brake system for the redundant power supply to the control modules 141-142 and the sensor groups 151-152, no additional power supply is needed to improve the fault tolerance and the reliability of the brake system of the vehicle, thereby avoiding an increase in manufacturing costs, body weight and body volume of the vehicle.

Those skilled in the art may also understand that the recharging power source 17 with an output voltage of 24 V and the capacitive power sources 131-132 with an output voltage of 48 V are only a specific proposal according to the present invention, mainly used to clearly show the concept of the present invention and to provide a specific proposal that is convenient for the public to implement, rather than to limit the protection scope of the present invention.

Optionally, in another embodiment, based on the concept of the present invention, the recharging power source 17 of the vehicle may have a higher output voltage, and the capacitive power sources 131-132 may have a lower output voltage, so that the recharging power source 17 is used as a regular power supply for the brake system of the vehicle, and the capacitive power sources 131-132 are used as redundant power supplies.

In one embodiment of the present invention, the sensor groups 151-152 may further comprise one or more of the sensors 211-214 for indicating the operation angle, stroke, or force of a brake demand input device of the vehicle, such as a brake pedal, a parking switch or the like.

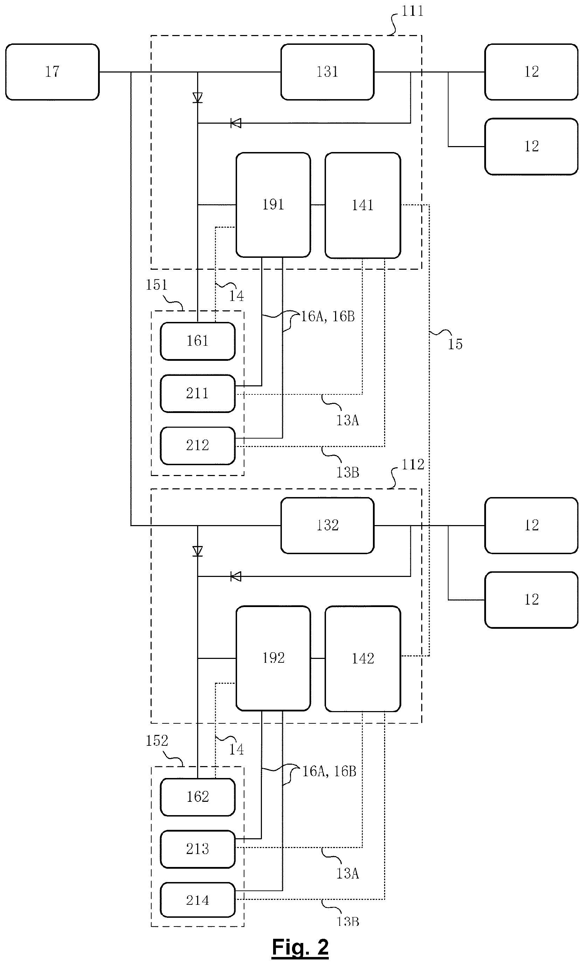

Referring to **Fig. 2,** Fig. 2 shows a schematic structural diagram of a brake system of a vehicle according to an embodiment of the present invention.

As shown in Fig. 2, the control module 111 further comprises a voltage converter 191, e.g. a DC/DC module. Its input is electrically connected to the recharging power source 17 and the capacitive power source 131. Its output is connected to the controller 141 and a portion of the sensors 211-212 in the sensor group 151. Thus, the controller 141 and sensors 211-212 are redundantly powered by the recharging power source 17 and the capacitive power source 131, and the power supply voltage may be converted by the voltage converter 191. With regard to the sensors 211-212, the voltage converter may comprise two low voltage outputs, e.g. 5 V voltage, to respectively supply power to the sensors 211-212 via power supply lines 16A-16B. The voltage converter 192, capacitive power source 132, controller 142 in the control module 112 and a portion of the sensors 213-214 in the sensor group 152 may be configured in the same way as above, which is not repeated here.

In one embodiment, the controller 141 of the control module 111 and the controller 142 of the control module 112 may be communicatively connected via the communication line 15.

In one embodiment, the sensors 211-214 of the sensor groups 151-152 may be Hall sensors, configured to output corresponding electrical signals to the controllers 141-142 via the communication lines 13A-13B according to the magnetic field of a magnet moving with the brake pedal of the vehicle, so as to indicate the brake pedal stroke of the vehicle after cross-validation in the form of electrical signals.

Specifically, the controller 141 may obtain a duty ratio signal PWM-A, having a value ranging from 10 % to 90 %, according to the electrical signal output from the sensor 211, and obtain a voltage signal SENT-B, having a value ranging from 90 % to 10 %, according to the electrical signal output from the sensor 212. The controller 142 may obtain a duty ratio signal PWM-B, having a value ranging from 90% to 10%, according to the electrical signal output from the sensor 213, and obtain a voltage signal SENT-A, having a value ranging from 10% to 90%, according to the electrical signal output from the sensor 214.

The duty ratio signals PWM-A and PWM-B may be obtained by sensing and modulating the electrical signals output by the sensors 211, 213. The voltage signals SENT-A and SENT-B may be obtained by sensing the amplitudes of the electrical signals output by the sensors 214, 212. The ranges of the duty ratio signals PWM-A, PWM-B and the voltage signals SENT-A, SENT-B may be determined by software calibration.

The controllers 141-142 may verify whether the obtained duty ratio signals and the obtained voltage signals are consistent, according to a pre-stored signal relationship data. In response to the signals PWM-A and SENT-B corresponding to the sensor group 151 acquired by the controller 141 of the control module 111 failing the verification, the controller 141 may obtain the brake demand, determined by the signals PWM-B and SENT- A with successful verification, from the communication connected controller 142 and generate a brake request accordingly, and vice versa.

In one embodiment of the present invention, a plurality of sensors 161, 211-212 of the sensor group 151 and sensors 162, 213-214 of the sensor group 152, disposed on a brake demand input device such as a brake pedal, may accomplish signal and power transmission with the recharging power source 17, the capacitive power sources 131-132, the voltage converters 191-192 and the controllers 141-142 by a composite wiring with connectors 31-32.

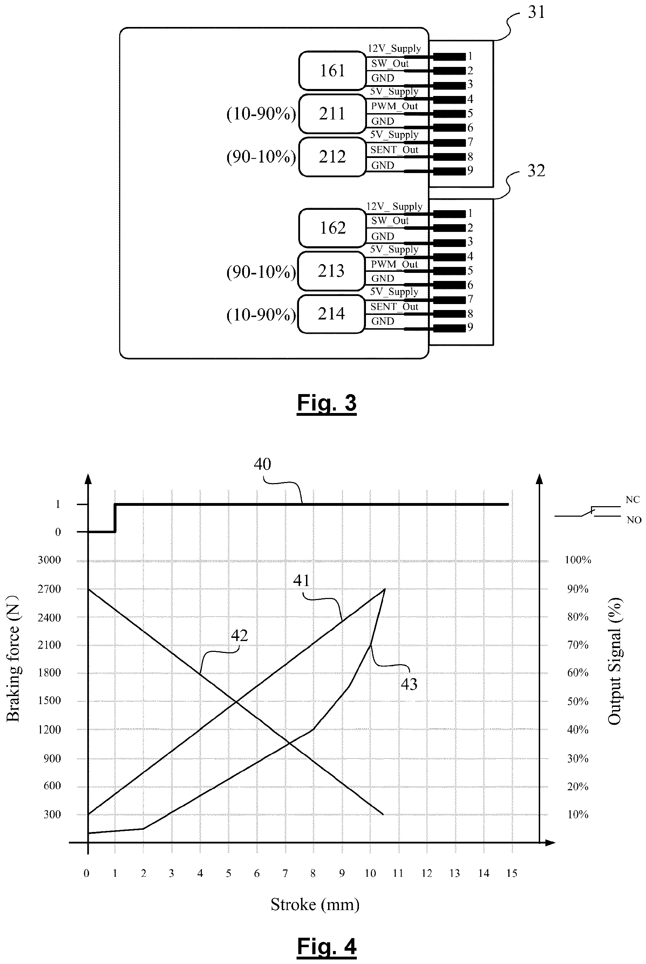

Referring to **Fig. 3,** Fig. 3 shows a schematic diagram of interfaces of a sensor group according to an embodiment of the present invention.

As shown in Fig. 3, the sensor 161 may be electrically connected to the recharging power source 17 and the capacitive power source 131 by a power supply interface 12V_Supply of the connector 31, thereby redundantly powered by the recharging power source 17 and the capacitive power source 131. Exemplarily, the voltage of the power supply interface is adjusted to 12 V by a voltage control module 181. The sensor 161 may be communicatively connected to the controller 141 and/or the voltage converter 191 via the communication line 14 by a communication interface SW_Out of the connector 31, so as to transmit a signal to the controller 141 to indicate that the brake pedal is operated and/or transmit a signal to the voltage converter 191 as a wakeup signal. The sensor 161 may be grounded by a ground interface GND of the connector 31.

The sensor 211 may be electrically connected to a low voltage output of the voltage converter 191 via the power supply line 16A by a power supply interface 5V_Supply of the connector 31, thereby redundantly powered by the recharging power source 17 and the capacitive power source 131. The sensor 211 may be communicatively connected to the controller 141 via the communication line 13A by a communication interface PWM_Out of the connector 31, so as to transmit the duty ratio signal PWM-A, indicating the displacement stroke of the brake pedal, to the controller 141. The duty ratio signal PWM-A may have a value from 10 % to 90 % according to the specific displacement stroke of the brake pedal. The sensor 211 may be grounded by the ground interface GND of the connector 31.

The sensor 212 may be electrically connected to another low voltage output of the voltage converter 191 via the power supply line 16B by the power supply interface 5V_Supply of the connector 31, thereby redundantly powered by the recharging power source 17 and the capacitive power source 131. The sensor 212 may be communicatively connected to the controller 141 via the communication line 13B by a communication interface SENT_Out of the connector 31, so as to transmit the voltage signal SENT-B, indicating the displacement stroke of the brake pedal, to the controller 141. The voltage signal SENT-B may be calibrated from 90% to 10%, which is opposite to the sensor 211, according to the specific displacement stroke of the brake pedal. The sensor 212 may be grounded by the ground interface GND of the connector 31.

Accordingly, the sensor 162 may be electrically connected to the recharging power source 17 and the capacitive power source 132 by a power supply interface 12V_Supply of the connector 32, thereby redundantly powered by the recharging power source 17 and the capacitive power source 132. The sensor 162 may be communicatively connected to the controller 142 and/or the voltage converter 192 via the communication line 14 by a communication interface SW_Out of the connector 32, so as to transmit a signal to the controller 142 to indicate that the brake pedal is operated and/or transmit a signal to the voltage converter 192 as a wakeup signal. The sensor 162 may be grounded by a ground interface GND of the connector 32.

The sensor 213 may be electrically connected to a low voltage output of the voltage converter 192 via the power supply line 16A by a power supply interface 5V_Supply of the connector 32, thereby redundantly powered by the recharging power source 17 and the capacitive power source 132. The sensor 213 may be communicatively connected to the controller 142 via the communication line 13A by a communication interface PWM_Out of the connector 32, so as to transmit the duty ratio signal PWM-B, indicating the displacement stroke of the brake pedal, to the controller 142. The duty ratio signal PWM-B may have a value from 90 % to 10 % according to the specific displacement stroke of the brake pedal. The sensor 213 may be grounded by the ground interface GND of the connector 32.

The sensor 214 may be electrically connected to another low voltage output of the voltage converter 192 via the power supply line 16B by the power supply interface 5V_Supply of the connector 32, thereby redundantly powered by the recharging power source 17 and the capacitive power source 132. The sensor 214 may be communicatively connected to the controller 142 via the communication line 13B by a communication interface SENT_Out of the connector 32, so as to transmit the voltage signal SENT-A, indicating the displacement stroke of the brake pedal, to the controller 142. The voltage signal SENT-A may be calibrated from 10% to 90%, which is opposite to the sensor 213, according to the specific displacement stroke of the brake pedal. The sensor 214 may be grounded by the ground interface GND of the connector 32.

Those skilled in the art may understand that the wiring method described above is only a specific proposal according to the present invention, mainly used to clearly show the concept of the present invention and provide a specific proposal that is convenient for the public to implement, rather than limiting the protection scope of the present invention. For example, the signal of the sensor 212 may be transmitted to the controller 142. Accordingly, the signal of the sensor 213 may be transmitted to the controller 141. By using the method of cross-signal verification, the credibility may be further improved.

Optionally, in another embodiment, based on the concept of the present invention, the sensors 211-212 of the sensor group 151 may also be electrically connected to the recharging power source 17 and the corresponding capacitive power source 131, thereby redundantly powered by the recharging power source 17 and the capacitive power source 131. The sensors 213-214 of the sensor group 152 may also be electrically connected to the recharging power source 17 and the corresponding capacitive power source 132, thereby redundantly powered by the recharging power source 17 and the capacitive power source 132.

By using the highly redundant sensor power supply architecture with redundant power supply function, all sensors 161-162, 211-214 of the vehicle brake system may still be powered by a redundant power supply, even when a portion of the power supply network of the vehicle fails. Therefore, the displacement information of the brake pedal may be collected normally for the vehicle brake system to identify the brake demand of the driver, and ensure the operability of the brake system.

In one embodiment of the present invention, the controllers 141-142 may pre-store signal relationship data of the voltage signal and the duty ratio signal. The controllers 141-142 may further pre-store a correspondence between the sensor signals, such as voltage signals and duty ratio signals, and the displacement stroke of the brake pedal. Optionally, the controllers 141-142 may further pre-store a correspondence between the displacement stroke of the brake pedal and the corresponding target braking force. The controllers 141-142 may verify whether the acquired sensor signals are consistent according to the pre-stored signal relationship data, and determine the corresponding brake pedal displacement stroke according to the consistent sensor signals, thereby generating a brake request indicating the corresponding target braking force.

Referring to Fig. **4,** Fig. 4 shows a schematic diagram of generating a brake request according to a sensor signal according to an embodiment of the present invention.

As shown in Fig. 4, the sensor signal 40 may correspond to the signals transmitted by the sensors 161-162 to the controllers 141-142 and/or the voltage converters 191-192, used to indicate whether a brake demand input device such as a brake pedal is operated. The sensor signal 41 may correspond to the duty ratio signal PWM-A transmitted from the sensor 211 to the controller 141, and the voltage signal SENT-A transmitted from the sensor 214 to the controller 142. The duty ratio signal PWM-A and voltage signal SENT-A range from 10 % to 90 %. The sensor signal 42 may correspond to the voltage signal SENT-B transmitted from the sensor 212 to the controller 141, and the duty ratio signal PWM-B transmitted from the sensor 213 to the controller 142. The duty ratio signal PWM-B and the voltage signal SENT-B range from 90% to 10%. The pedal characteristic curve 43 may indicate the correspondence between the displacement stroke of the brake pedal and the target braking force.

In one embodiment, in response to the brake pedal of the vehicle being pressed, the output switch (not shown) corresponding to the sensor 161-162 changes from a disconnected state NO to a connected state NC. The sensors 161-162 may respectively transmit a high-level (logic 1) signal to the corresponding voltage converters 191-192, thereby exemplarily serving as a wake up signal of the brake system.

Those skilled in the art may understand that the proposal of using two sensors 161-162 to indicate whether the brake demand input device is operated, is only a specific proposal according to the present invention, mainly used to correspond to the two control modules 111-112 of vehicle brake system. In other embodiments, based on the concept of the present invention, the sensor groups 151-152 may also share one sensor to indicate whether the brake demand input device is operated. The shared sensor may be communicatively connected to the controllers 141-142 and/or the voltage converters 191-192, so that the brake system of the vehicle may be woken up in response to the brake demand input device being operated.

In one embodiment, the controller 141 may verify whether the duty ratio signal PWM-A transmitted by the sensor 211 and the voltage signal SENT-B transmitted by the sensor 212 are consistent according to the pre-stored signal relationship data. The controller 142 may verify whether the duty ratio signal PWM-B transmitted by the sensor 213 and the voltage signal SENT-A transmitted by the sensor 214 are consistent according to the pre-stored signal relationship data of the voltage signal 41 and the duty ratio signal 42.

If the duty ratio signal PWM-A transmitted by the sensor 211 is consistent with the voltage signal SENT-B transmitted by the sensor 212, the controller 141 may determine the displacement stroke of the brake pedal, corresponding to the sensor signals transmitted by the sensors 211-212, according to a pre-stored correspondence between the displacement stroke of the brake pedal and the sensor signal, such as a voltage signal, a duty ratio signal or the like. Thereafter, the controller 141 may generate a brake request indicating a corresponding target braking force according to the pre-stored pedal characteristic curve 43. Correspondingly, the controller 142 may verify the sensor signals transmitted by the sensors 213-214 in the above manner, and generate a brake request accordingly.

If the duty ratio signal PWM-A sent by the sensor 211 is not consistent with the voltage signal SENT-B transmitted by the sensor 212, while the duty ratio signal PWM-B transmitted by the sensor 213 is consistent with the voltage signal SENT-A transmitted by the sensor 214, the controller 141 may obtain the displacement stroke of the brake pedal determined by the controller 142 via the communication connection with the controller 142 to generate a brake request, and vice versa.

By using the communicatively connected control modules 111-112, when the verification of the signals from the sensor group 151 or 152 by a corresponding control module 111 or 112 fails, the brake system may use the signal with successful verification obtained from the other control module 112 or 111 to brake the vehicle, thereby improving the fault tolerance of the brake system of the vehicle.

Those skilled in the art may understand that the proposal of using two communicatively connected control modules 111-112 to redundantly control the electric brake device 12 is only a specific proposal according to the present invention, mainly used to improve the functional safety of the brake system.

Optionally, in another embodiment, based on the concept of the present invention, the brake system of the vehicle may also use two master-slave control modules and their sensor groups to control the electric brake device 12. When the master control module and its sensor group cannot verify the brake demand, the slave control module and its sensor group may be switched to control the electric brake device 12 provided on each wheel of the vehicle.

In another embodiment of the present invention, the brake system may comprise three control modules 111-113, exemplarily corresponding to three axles of the vehicle and six electric brake devices 12 provided on the wheels of the vehicle.

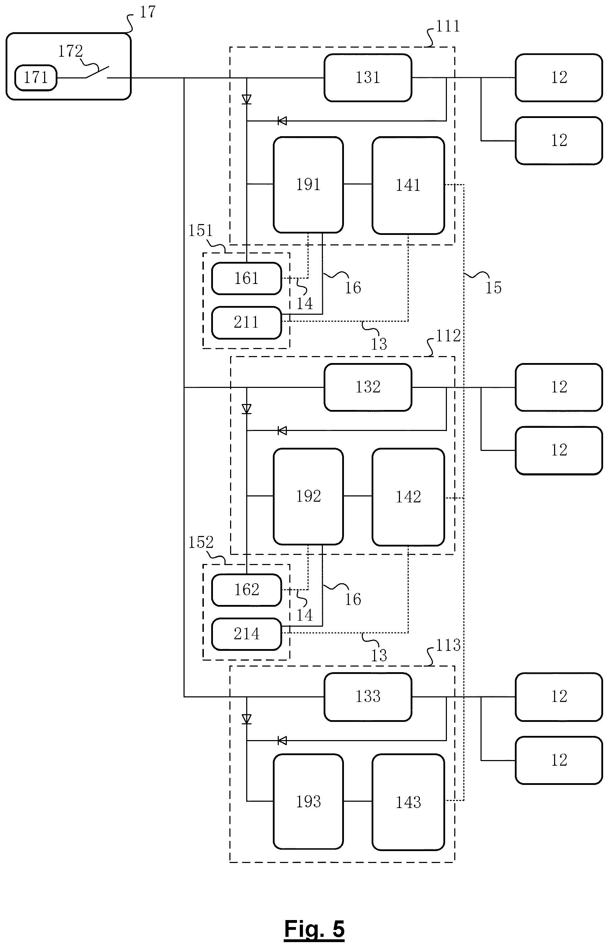

Referring to **Fig. 5,** Fig. 5 shows a schematic structural diagram of a brake system of a vehicle according to an embodiment of the present invention.

As shown in Fig. 5, the brake system of the vehicle may comprise three control modules 111-113 and six electric brake devices 12 provided on the wheels of the vehicle. Each of the control modules 111-113 may comprise a capacitive power source 131-133 and a controller 141-143. The control modules 111-112 may be connected to a sensor group 151-152 respectively. The capacitive power sources 131-133 may be powered by the recharging power source 17 of the vehicle, used to respectively supply power to two corresponding electric brake devices 12 to generate a braking force. The recharging power source 17 of the vehicle may comprise a battery 171 and a main switch 172. The main switch 172 may be used to switch the power supply state of the recharging power source 17 to the brake system of the vehicle.

In one embodiment, the sensor group 151 may comprise a sensor 161 and a sensor 211. The controller 141 and the sensor 161 in the sensor group 151 may be redundantly powered by the corresponding capacitive power source 131 and the recharging power source 17. The control module 111 further comprises a voltage converter 191, e.g. a DC/DC module. Its input is electrically connected to the recharging power source 17 and the capacitive power source 131. Its output is connected to the controller 141 and the sensor 211 in the sensor group 151 is connected to the low voltage output of the voltage converter 191 via the power supply line 16. Thus, the controller 141 and the sensor 211 are redundantly powered by the recharging power source 17 and the capacitive power source 131, and the power supply voltage may be converted by the voltage converter 191.

The sensor 161 may be configured to indicate whether a brake demand input device of the vehicle such as a brake pedal, a parking switch or the like is operated. The signal of the sensor 161 is transmitted to the controller 141 and /or the voltage converter 191 via the communication line 14 and may be used to wake up the brake system of the vehicle. The sensor 211 may generate a duty ratio signal ranging from 10% to 90% to be transmitted to the controller 141 via the communication line 13, used to indicate the brake pedal stroke of the vehicle. The control module 111 may generate a corresponding brake request according to a pre-stored correspondence between the brake pedal stroke and the target braking force.

The sensor group 152 may comprise a sensor 162 and a sensor 214. The controller 142 and the sensor 162 in the sensor group 152 are redundantly powered by the corresponding capacitive power source 132 and the recharging power source 17. The control module 112 further comprises a voltage converter 192, e.g. a DC/DC module. Its input is electrically connected to the recharging power source 17 and the capacitive power source 132. Its output is connected to the controller 142 and the sensor 214 in the sensor group 152 is connected to the low voltage output of the voltage converter 192 via the power supply line 16. Thus, the controller 142 and the sensor 214 are redundantly powered by the recharging power source 17 and the capacitive power source 132, and the power supply voltage may be converted by the voltage converter 192.

The sensor 162 may be configured to indicate whether a brake demand input device of the vehicle such as a brake pedal, a parking switch or the like is operated. The signal of the sensor 162 is transmitted to the controller 142 and /or the voltage converter 192 via the communication line 14 and may be used to wake up the brake system of the vehicle. The sensor 214 may generate a voltage signal ranging from 10% to 90% to be transmitted to the controller 142 via the communication line 13, used to indicate the brake pedal stroke of the vehicle. The control module 112 may generate a corresponding brake request according to the pre-stored correspondence between the brake pedal stroke and the target braking force.

The control module 113 is configured in the same way as control modules 111-112, comprising capacitive power source 133, voltage converter 193 and controller 143, but may not be provided with a corresponding sensor group, but acquire signals directly from the sensors 211 and/or 214 or via the control modules 111-112, and generate a corresponding brake request according to the pre-stored correspondence between the brake pedal stroke and the target braking force. Optionally, in another embodiment, the control module 113 may also obtain the brake demand determined by the control modules 111-112 after processing the sensor signals from the control modules 111-112, and generate a corresponding brake request according to the brake demand.

In an embodiment, the three control modules 111-113 may be communicatively connected with each other via the communication line 15. The three communicatively connected control modules 111-113 may judge whether the target braking force indicated by each of the brake requests is same, thereby verifying whether the sensor signals transmitted by the sensors 211, 214, 215 are consistent. In response to the target braking force indicated by each brake request being same, the three control modules 111-113 may send the generated brake request to the two corresponding electric brake devices 12, so as to control the two corresponding electric brake devices 12 to brake the corresponding wheels. In response to the target braking force indicated by one brake request being different from the target braking force indicated by the other two brake requests, the corresponding control module 111 may use the sensor signal received from one of the other two control modules 112-113 to regenerate a corresponding brake request, and send the regenerated brake request to the two corresponding electric brake devices 12, so as to control the two corresponding electric brake devices 12 to brake the corresponding wheels.

Optionally, in another embodiment of the present invention, the control modules 111-112 may be respectively connected to one sensor group 151-152. The sensor group 151 may comprise a sensor 161 and a sensor 211. The sensor 211 may generate a duty ratio signal ranging from 10% to 90 %, configured to indicate the brake pedal stroke of the vehicle. The control module 111 may generate a corresponding brake request according to the pre-stored correspondence between the brake pedal stroke and the target braking force. The sensor group 152 may comprise a sensor 162 and a sensor 214. The sensor 214 may generate a voltage signal ranging from 10 % to 90 %, configured to indicate the brake pedal stroke of the vehicle. The control module 112 may generate a corresponding brake request according to the pre-stored correspondence between the brake pedal stroke and the target braking force. Meanwhile, the control module 113 may also be connected to a corresponding sensor group. The sensor group may comprise a first sensor and a second sensor. The controller 143 and the first sensor of the sensor group may be redundantly powered by the corresponding capacitive power source 133 and the recharging power source 17. The first sensor may be configured to indicate whether a brake demand input device of the vehicle such as a brake pedal, a parking switch or the like is operated. The signal of the first sensor may be used to wake up the brake system of the vehicle. The second sensor may generate a voltage signal ranging from 90% to 10%, configured to indicate the force applied to the vehicle brake pedal. The control module 113 may generate a corresponding brake request according to the pre-stored correspondence between the brake pedal force and the target braking force.

In one embodiment, the recharging power source 17 of the vehicle may comprise a battery 171 and a main switch 172. The main switch 172 may be configured to switch the power supply state of the recharging power source 17 to the brake system of the vehicle. The main switch 172 of the recharging power source 17 may be manually turned off by the driver, or turned off due to a vehicle failure or a misoperation of the driver. When the main switch 172 is turned off, the recharging power source 17 may stop supplying power to the brake system of the vehicle. At this time, the capacitive power sources 131-132 may supply power to the corresponding controllers 141-142 and the sensors 161-162 of the corresponding sensor groups 151-152, and may supply power to the sensors 211, 214 of the corresponding sensor groups 151-152 respectively via the low voltage outputs of the voltage converter 191-192.

In response to the driver pressing the vehicle brake pedal, the sensors 161-162 may transmit signals to the corresponding controllers 141-142 and/or the voltage converter 191-192, with power only supplied by the capacitive power sources 131-132, to wake up the brake system of the vehicle or indicate the operation of the brake pedal performed by the driver. Meanwhile, the sensors 211, 214 may respectively transmit the collected signals, indicating the operation amount of the brake pedal, to the corresponding controllers 141-142 under the power supply of the capacitive power source 131-132 converted by the voltage converter 191-192. The controllers 141-142 may generate corresponding brake requests, according to the pre-stored correspondence, under the power supply of the capacitive power sources 131-132, thereby controlling the electric brake devices 12 provided on the wheels of the vehicle to brake the corresponding wheels. The controller 143 of the control module 113 may obtain the signals of the sensor groups 151-152 from the communicatively connected controllers 141-142 for processing or directly obtain the brake demand generated by the signal processing of controllers 141-142, and use the capacitive power source 133 to supply power to the corresponding electric brake device 12. In addition, the sensor groups 151-152 may also provide redundant sensor signals by using the configuration method of the redundant sensors in the above embodiments, which is not repeated here.

Therefore, the architecture of the highly redundant electromechanical brake system with redundant power supply function according to the present invention may be extended and applied to vehicles with three or more axes. The electromechanical brake system may ensure the standby state or the operability of the brake system of the vehicle, even when a portion of the power supply network fails.

The previous description of the invention is provided to enable any person skilled in the art to make or use the invention. Various modifications to the present invention within the scope of the invention, as defined in the appended claims, will be obvious to those skilled in the art. Thus, the present invention is not intended to be limited to the examples and designs described herein.

### LIST OF REFERENCE NUMERALS

- 111: control module
- 112: control module
- 113: control module
- 12: electric brake device
- 13: communication line
- 13A: communication line
- 13B: communication line
- 14: communication line
- 15: communication line
- 16: power supply line
- 16A: power supply line
- 16B: power supply line
- 131: capacitive power source, ultra-capacitor module
- 132: capacitive power source, ultra-capacitor module
- 133: capacitive power source, ultra-capacitor module
- 141: controller
- 142: controller
- 143: controller
- 151: sensor group
- 152: sensor group
- 161: sensor
- 162: sensor
- 17: recharging power source
- 171: battery
- 172: main switch
- 181: voltage control module
- 182: voltage control module
- 191: voltage converter
- 192: voltage converter
- 193: voltage converter
- 211: sensor
- 212: sensor
- 213: sensor
- 214: sensor
- 31: connector
- 32: connector
- 12V_Supply: power supply interface
- SW_Out: communication interface
- 5V_Supply: power supply interface
- PWM_Out: communication interface
- SENT_Out: communication interface
- GND: ground interface
- 40: sensor signal
- 41: sensor signal
- 42: sensor signal
- 43: pedal characteristic curve
- NO: disconnected state
- NC: connected state

## Claims

1. A brake system for a vehicle, comprising at least two control modules (111, 112, 113) and an electric brake device (12) disposed on each wheel of the vehicle, wherein each of the control modules (111, 112, 113) comprises a capacitive power source (131, 132, 133) and a controller (141, 142, 143) and connects to a sensor group (151, 152), wherein the capacitive power source (131, 132, 133) is powered from a recharging power source (17) for powering the electric brake devices (12) to generate a braking force, wherein the controller (141, 142, 143) and/or at least a portion of sensors (161, 162) of the sensor group (151, 152) are redundantly powered by a corresponding capacitive power source (131, 132, 133) and the recharging power source (17), **characterized in that** the sensor group (151, 152) comprises a switch or a sensor (161, 162) for indicating whether a brake demand input device of the vehicle is operated, wherein a signal of the switch or the sensor (161, 162) is configured to wake up the brake system.

2. The brake system of claim 1, **characterized in that** the controller (141, 142, 143) and/or at least the portion of sensors (161, 162) of the sensor group (151, 152) are configured to be powered by the one of the corresponding capacitive power source (131, 132, 133) and the recharging power source (17), which has a higher output voltage.

3. The brake system of one of claims 1 to 2, **characterized in that** the sensor group (151, 152) comprises one or more sensors (211, 212, 213, 214) for indicating angle, stroke or force of operation of the brake demand input device of the vehicle.

4. The brake system of one of claims 1 to 3, **characterized in that** the sensor group (151, 152) comprises at least two sensors (211, 212, 213, 214) for generating signals of different types and/or different ranges,
wherein the controller (141, 142) verifies whether the signals are matched according to a pre-stored signal relationship data.

5. The brake system of one of claims 1 to 4, **characterized in that** each of the sensor groups (151, 152) respectively detects the operation of the same brake demand input device thereby generating redundant signals.

6. The brake system of claim 5, **characterized in that** the control modules (111, 112) are communicatively connected,
wherein in response to a verification failure of a signal, acquired by any one of the control modules (111, 112) from a corresponding sensor group (151, 152), the control module (111, 112) employs a signal with successful verification from another control module (112, 111).

7. The brake system of one of claims 1 to 6, **characterized in that** the recharging power source (17) and the capacitive power source (131, 132, 133) are electrically connected to a voltage converter (191, 192, 193), wherein the power supply voltage of the controller (141, 142, 143) and/or at least a portion of sensors (211, 212, 213, 214) of the sensor group (151, 152) is converted by the voltage converter (191, 192, 193).

8. The brake system of one of claims 1 to 7, **characterized in that** the recharging power source (17) and the capacitive power source (131, 132) are electrically connected to a voltage control module (181, 182), and redundantly supply power to at least the portion of sensors (161, 162) of the sensor group (151, 152) via the voltage control module (181, 182).

9. The brake system of claim 8, **characterized in that** the voltage control module (181, 182) comprises a DC/DC module and/or a low dropout regulator.

10. The brake system of one of claims 1 to 9, **characterized in that** the recharging power source (17) comprises a main switch (172),
wherein the capacitive power source (131, 132, 133) supplies power to the controller (141, 142, 143) and/or at least the portion of sensors (161, 162) of the sensor group (151, 152) to maintain a standby state or operability of the brake system when the main switch (172) is off.

## Patentansprüche

1. Bremssystem für ein Fahrzeug, umfassend mindestens zwei Steuermodule (111, 112, 113) und eine elektrische Bremsvorrichtung (12), die an jedem Rad des Fahrzeugs angeordnet ist, wobei jedes der Steuermodule (111, 112, 113) eine kapazitive Energiequelle (131, 132, 133) und ein Steuergerät (141, 142, 143) umfasst und mit einer Sensorgruppe (151, 152) verbunden ist, wobei die kapazitive Energiequelle (131, 132, 133) von einer Nachlade-Energiequelle (17) gespeist ist, um die elektrischen Bremsvorrichtungen (12) zur Erzeugung einer Bremskraft zu versorgen, wobei das Steuergerät (141, 142, 143) und/oder zumindest ein Teil der Sensoren (161, 162) der Sensorgruppe (151, 152) von einer entsprechenden kapazitiven Energiequelle (131, 132, 133) und der Nachlade-Energiequelle (17) redundant versorgt werden, **dadurch gekennzeichnet, dass** die Sensorgruppe (151, 152) einen Schalter oder einen Sensor (161, 162) umfasst, um anzuzeigen, ob eine Bremsanforderungs-Eingabevorrichtung des Fahrzeugs betätigt wird, wobei ein Signal des Schalters oder des Sensors (161, 162) so ausgestaltet ist, dass es das Bremssystem aktiviert bzw. aufweckt.

2. Bremssystem nach Anspruch 1, **dadurch gekennzeichnet, dass** der Controller (141, 142, 143) und/oder zumindest der Teil der Sensoren (161, 162) der Sensorgruppe (151, 152) so ausgestaltet sind, dass sie von der entsprechenden kapazitiven Energiequelle (131, 132, 133) oder der Nachlade-Energiequelle (17), die eine höhere Ausgangsspannung aufweist, gespeist werden.

3. Bremssystem nach einem der Ansprüche 1 bis 2, **dadurch gekennzeichnet, dass** die Sensorgruppe (151, 152) einen oder mehrere Sensoren (211, 212, 213, 214) zur Anzeige von Winkel, Hub oder Kraft der Betätigung der Bremsanforderungseingabevorrichtung des Fahrzeugs umfasst.

4. Bremssystem nach einem der Ansprüche 1 bis 3, **dadurch gekennzeichnet, dass** die Sensorgruppe (151, 152) mindestens zwei Sensoren (211, 212, 213, 214) zur Erzeugung von Signalen unterschiedlichen Typs und/oder unterschiedlicher Bereiche umfasst, wobei die Steuerung (141, 142) prüft, ob die Signale gemäß einer vorab gespeicherten Signalbeziehung übereinstimmen.

5. Bremssystem nach einem der Ansprüche 1 bis 9, **dadurch gekennzeichnet, dass** die Nachlade-Energiequelle (17) einen Hauptschalter (172) umfasst, wobei die kapazitive Energiequelle (131, 132, 133) den Controller (141, 142, 143) und/oder zumindest den Teil der Sensoren (161, 162) der Sensorgruppe (151, 152) mit Energie versorgt, um einen Bereitschaftszustand oder die Betriebsbereitschaft des Bremssystems aufrechtzuerhalten, wenn der Hauptschalter (172) ausgeschaltet ist.

6. Bremssystem nach Anspruch 5, **dadurch gekennzeichnet, dass** die Steuermodule (111, 112) kommunikativ verbunden sind, wobei als Reaktion auf eine fehlgeschlagene Verifizierung eines Signals, das von einem der Steuermodule (111, 112) von einer entsprechenden Sensorgruppe (151, 152) erlangt wurde, das Steuermodul (111, 112) ein Signal mit erfolgreicher Verifizierung von einem anderen Steuermodul (112, 111) einsetzt.

7. Bremssystem nach einem der Ansprüche 1 bis 6, **dadurch gekennzeichnet, dass** die Nachlade-Energiequelle (17) und die kapazitive Energiequelle (131, 132, 133) elektrisch mit einem Spannungswandler (191, 192, 193) verbunden sind, wobei die Versorgungsspannung des Steuergeräts (141, 142, 143) und/oder zumindest eines Teils der Sensoren (211, 212, 213, 214) der Sensorgruppe (151, 152) durch den Spannungswandler (191, 192, 193) gewandelt wird.

8. Bremssystem nach einem der Ansprüche 1 bis 7, **dadurch gekennzeichnet, dass** die Nachlade-Energiequelle (17) und die kapazitive Energiequelle (131, 132) mit einem Spannungssteuermodul (181, 182) elektrisch verbunden sind und zumindest den Teil der Sensoren (161, 162) der Sensorgruppe (151, 152) über das Spannungssteuermodul (181, 182) redundant mit Energie versorgen.

9. Bremssystem nach Anspruch 8, **dadurch gekennzeichnet, dass** das Spannungssteuerungsmodul (181, 182) ein DC/DC-Modul und/oder einen Low-Dropout-Regler umfasst.

10. Bremssystem nach einem der Ansprüche 1 bis 9, **dadurch gekennzeichnet, dass** die Nachlade-Energiequelle (17) einen Hauptschalter (172) umfasst, wobei die kapazitive Energiequelle (131, 132, 133) den Controller (141, 142, 143) und/oder zumindest den Teil der Sensoren (161, 162) der Sensorgruppe (151, 152) mit Energie versorgt, um einen Bereitschaftszustand oder eine Betriebsbereitschaft des Bremssystems aufrechtzuerhalten, wenn der Hauptschalter (172) ausgeschaltet ist.

## Revendications

1. Système de freins pour un véhicule, comprenant au moins deux modules de commande (111, 112, 113) et un dispositif de frein électrique (12) disposé sur chaque roue du véhicule, dans lequel chacun des modules de commande (111, 112, 113) comprend une source de puissance capacitive (131, 132, 133) et un contrôleur (141, 142, 143), et est connecté à un groupe de capteurs (151, 152), dans lequel la source de puissance capacitive (131, 132, 133) est alimentée par une source de puissance de recharge (17) destinée à alimenter les dispositifs de freins électriques (12) pour générer une force de freinage, dans lequel le contrôleur (141, 142, 143) et/ou au moins une portion de capteurs (161, 162) du groupe de capteurs (151, 152) sont alimentés de manière redondante par une source de puissance capacitive correspondante (131, 132, 133) et la source de puissance de recharge (17), **caractérisé en ce que** le groupe de capteurs (151, 152) comprend un commutateur ou un capteur (161, 162) destiné à indiquer si un dispositif d'entrée de demande de freinage du véhicule est actionné, dans lequel un signal du commentateur ou du capteur (161, 162) est configuré pour réveiller le système de freins.

2. Système de freins selon la revendication 1, **caractérisé en ce que** le contrôleur (141, 142, 143) et/ou au moins la portion de capteurs (161, 162) du groupe de capteurs (151, 152) sont configurés pour être alimentés par la source parmi la source de puissance capacitive correspondante (131, 132, 133) et la source de puissance de recharge (17), qui a une tension de sortie plus élevée.

3. Système de freins selon l'une des revendications 1 à 2, **caractérisé en ce que** le groupe de capteurs (151, 152) comprend un ou plusieurs capteurs (211, 212, 213, 214) destinés à indiquer un angle, une course ou une force d'actionnement du dispositif d'entrée de demande de frein du véhicule.

4. Système de freins selon l'une des revendications 1 à 3, **caractérisé en ce que** le groupe de capteurs (151, 152) comprend au moins deux capteurs (211, 212, 213, 214) destinés à générer des signaux de types différents et/ou de portées différentes,
dans lequel le contrôleur (141, 142) vérifie si les signaux sont en correspondance selon des données de relation de signaux pré-stockées.

5. Système de freins selon l'une des revendications 1 à 4, **caractérisé en ce que** chacun des groupes de capteurs (151, 152) détecte respectivement l'actionnement du même dispositif d'entrée de demande de freinage générant ainsi des signaux redondants.

6. Système de freins selon la revendication 5, **caractérisé en ce que** les modules de commande (111, 112) sont connectés en communication, dans lequel, en réponse à un échec de vérification d'un signal, acquis par l'un quelconque des modules de commande (111, 112) à partir d'un groupe de capteurs correspondant (151, 152), le module de commande (111, 112) utilise un signal avec une vérification réussie provenant d'un autre module de commande (112, 111).

7. Système de freins selon l'une des revendications 1 à 6, **caractérisé en ce que** la source de puissance de recharge (17) et la source de puissance capacitive (131, 132, 133) sont connectées électriquement à un convertisseur de tension (191, 192, 193), dans lequel la tension d'alimentation de puissance du contrôleur (141, 142, 143) et/ou au moins d'une portion de capteurs (211, 212, 213, 214) du groupe de capteurs (151, 152) est convertie par le convertisseur de tension (191, 192, 193).

8. Système de freins selon l'une des revendications 1 à 7, **caractérisé en ce que** la source de puissance de recharge (17) et la source de puissance capacitive (131, 132) sont connectées électriquement à un module de commande de tension (181, 182), et alimentent de manière redondante une puissance à au moins la portion de capteurs (161, 162) du groupe de capteurs (151, 152) via le module de commande de tension (181, 182).

9. Système de freins selon la revendication 8, **caractérisé en ce que** le module de commande de tension (181, 182) comprend un module CC/CC et/ou un régulateur à faible chute.

10. Système de freins selon l'une des revendications 1 à 9, **caractérisé en ce que** la source de puissance de recharge (17) comprend un interrupteur principal (172),
dans lequel la source de puissance capacitive (131, 132, 133) alimente une puissance au contrôleur (141, 142, 143) et/ou au moins à la portion de capteurs (161, 162) du groupe de capteurs (151, 152) pour maintenir un état de veille ou une opérabilité du système de freins quand l'interrupteur principal (172) est sur arrêt.
